# EUROPÄISCHE PATENTANMELDUNG

(11) **EP 0 776 791 A2**
(43) Veröffentlichungstag der Anmeldung: **04.06.1997**
(21) Anmeldenummer: 96119159.0
(22) Anmeldetag: 29.11.1996
(51) Int. Cl.: B60R 21/00

(54) **Sicherheitsnetz für Fahrzeuge**

(30) Priorität: 30.11.1995 DE 19544607
(71) Anmelder: Parat-Werk Schönenbach GmbH + Co KG, 94089 Neureichenau/Ndb (DE)
(72) Erfinder: Blaufelder, Claus, Dr.-Ing., 90547 Stein (DE)
(74) Vertreter: Eichstädt, Alfred, Dipl.-Ing.

(57) **Zusammenfassung**

Die Erfindung betrifft eine Vorrichtung zum Schutz des Fahrgastraumes eines Fahrzeugs gegenüber im Laderaums des Fahrzeugs beförderten Gegenständen. Diese besteht aus einem Sicherheitsnetz, welches an der Oberseite des Fahrzeugs angebracht und im Fahrzeug von oben nach unten ausziehbar ist.

## Beschreibung

Die Erfindung betrifft eine Vorrichtung zum Schutz des Fahrgastraumes eines Fahrzeugs gegenüber im Laderaum des Fahrzeugs beförderten Gegenständen, mit einer mit dem Fahrzeug fest verbundenen länglichen Halterung, in welcher eine Welle gelagert ist, an der ein Sicherheitsnetz befestigt ist, welches durch eine in der länglichen Halterung befindliche Öffnung unter Verwendung einer mit dem Sicherheitsnetz fest verbundenen Zugstange in Vertikalrichtung ausziehbar und im ausgezogenen Zustand in fahrzeugseitigen Halterungen befestigbar ist.

Aus der DE-A1-40 10 209 ist ein Sicherheitsnetz zum Schutz des Fahrgastraumes gegenüber dem Laderaum von Kombinationskraftfahrzeugen bekannt. Dieses weist zwei etwa parallel zueinander verlaufende Längskanten auf, von denen die eine im aufgespannten Zustand unterhalb des Fahrzeugdachs und die andere parallel zur Hinterkante der Rücksitzlehne verlauft. Dieses bekannte Sicherheitsnetz ist im nicht aufgespannten Zustand in einer Halterung angeordnet, die an der Rückseite der Rücksitzlehne angebracht ist. Das bekannte Sicherheitsnetz ist mittels einer Zugstange ausziehbar, an deren Stirnseiten Halteglieder angebracht sind, die wiederum an ihren Enden pilzförmige Köpfe aufweisen. Diese sind in an den Fahrzeugseitenwänden unterhalb des Daches angebrachte taschenförmige Aufnahmen einbringbar.

Weiterhin ist aus der DE-C2-42 39 471 eine bahnförmige Rückhaltevorrichtung für den Laderaum von Kraftfahrzeugen bekannt. Diese bekannte Rückhaltevorrichtung übt ihre Funktion auch noch dann aus, wenn je nach Anwendungsfall alternativ die eine oder die andere Rücksitzlehne nach vorne umgelegt ist. Dazu weist die bekannte Rückhaltevorrichtung eine zusätzliche Querstange auf, unterhalb derer die Rückhaltebahn in vertikaler Aufspannrichtung durchgehend geteilt ist und die dadurch gebildeten beiden unteren Teilbahnen voneinander unabhängig lösbare karosseriebodenseitige Befestigungsstellen aufweisen.

Ferner ist aus der DE-A1-43 28 746 eine Sicherheitsnetzanordnung bekannt, welche im Bereich zwischen dem Sicherheitsnetz und der oberen bzw. unteren Verankerungseinrichtung mit einer Längenausgleichseinrichtung in Gestalt eines in Schlaufen gelegten Gewebestreifens versehen ist. Bei einer Abstandsänderung zwischen der oberen und der unteren Verankerungseinrichtung im Falle eines Unfalls reißen die Abnaher auf und geben zusätzliches Material frei, um so das Sicherheitsnetz gegen eine zusätzliche Dehnung in Längsrichtung zu schützen.

Die Nachteile bekannter Sicherheitsnetzanordnungen bestehen darin, daß aufgrund der Befestigung der länglichen Halterung im Bereich der Oberkanten der Rücksitzlehnen viel Platz im Innenraum des Fahrzeugs benötigt wird. Weiterhin ergeben sich Probleme bei Fahrzeugen mit komplett oder teilweise umklappbarer Rücksitzbank. So ist es dort schwierig, auch bei umgeklappter Rücksitzbank die Funktion der Sicherheitsnetzanordnung in vollem Umfang aufrecht zu erhalten. Andererseits kann es auch notwendig sein, die Sicherheitsnetzanordnung aus dem Kraftfahrzeug auszubauen, um ein Umklappen der Rücksitzbank zu ermöglichen.

Die Aufgabe der Erfindung besteht darin, eine Vorrichtung mit den im Oberbegriff des Anspruchs 1 angegebenen Merkmalen derart weiterzubilden, daß die vorstehend beschriebenen Nachteile bekannter Sicherheitsnetzanordnungen nicht auftreten.

Diese Aufgabe wird bei einer Vorrichtung mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen ergeben sich aus den abhängigen Patentansprüchen.

Die Vorteile der Erfindung bestehen insbesondere darin, daß ein Fahrzeugbenutzer beim teilweisen oder kompletten Umlegen der Rücksitzbank keinerlei Rücksicht auf eine Sicherheitsnetzanordnung nehmen muß. Insbesondere ist kein Ausbau derselben notwendig. Weiterhin muß im Bereich der Rücksitzlehne des Fahrzeugs kein Platz für eine Sicherheitsnetzanordnung reserviert werden. Ferner kann die Funktion des Sicherheitsnetzes auch bei teilweise oder vollständig umgeklappter Rücksitzlehne stets sichergestellt werden.

Mittels der im Anspruch 3 angegebenen Merkmale wird eine besonders gute Befestigung der länglichen Halterung am Fahrzeugdach erreicht. Dabei kann diese Befestigung bereits bei der Fertigung des Fahrzeugs im Werk erfolgen oder auch im Sinne einer Nachrüstung des Fahrzeugs in der Werkstatt oder gar erst beim Endkunden.

Bei einer Vorrichtung mit den im Anspruch 4 angegebenen Merkmalen kann der Einbau der Halterung in das Fahrzeug besonders schnell und einfach erfolgen. Weiterhin ist bei Bedarf auch ein schneller und einfacher Ausbau der Halterung möglich.

Mittels der im Anspruch 5 genannten Vorrichtung wird erreicht, daß das Sicherheitsnetz im nicht aufgespannten Zustand, d. h. dann, wenn es nicht gebraucht wird, auch fast nicht zu sehen ist, so daß die Optik des Innenraumes des Fahrzeugs verbessert ist und auch mehr Platz im Innenraum des Fahrzeugs für andere Zwecke zur Verfügung steht.

Die Vorteile einer Vorrichtung mit den im Anspruch 6 angegebenen Merkmalen bestehen insbesondere darin, daß auch bei teilweise oder vollständig umgeklappter Rücksitzbank die Funktion des Sicherheitsnetzes bei gleichzeitig zur Verfügung stehendem vergrößerten Laderaums sichergestellt werden kann.

Mittels der im Anspruch 7 angegebenen Merkmale wird eine Ausrüstung des Fahrzeugs mit einem Schiebedach erleichtert oder gar erst ermöglicht.

Eine Vorrichtung mit den im Anspruch 8 angegebenen Merkmalen ist von den Fahrzeugpassagieren leicht bedienbar.

Die Vorteile einer Vorrichtung mit den im Anspruch 9 angegebenen Merkmalen bestehen insbesondere darin, daß die gesamte Höhe zwischen dem Fahrzeugboden bzw. der Ladefläche und dem Fahrzeugdach durch das Sicherheitsnetz geschützt ist.

Bei einer Vorrichtung mit den im Anspruch 10 angegebenen Merkmalen wird die gesamte Fahrzeugbreite vom Sicherheitsnetz geschützt, so daß bei einem Unfall auch zwischen dem Sicherheitsnetz und den Fahrzeugseitenwänden keine Gegenstände vom Laderaum in den Fahrgastraum fliegen können.

Weitere Vorteile der Erfindung ergeben sich aus der Erläuterung von Ausführungsbeispielen anhand der Figuren.

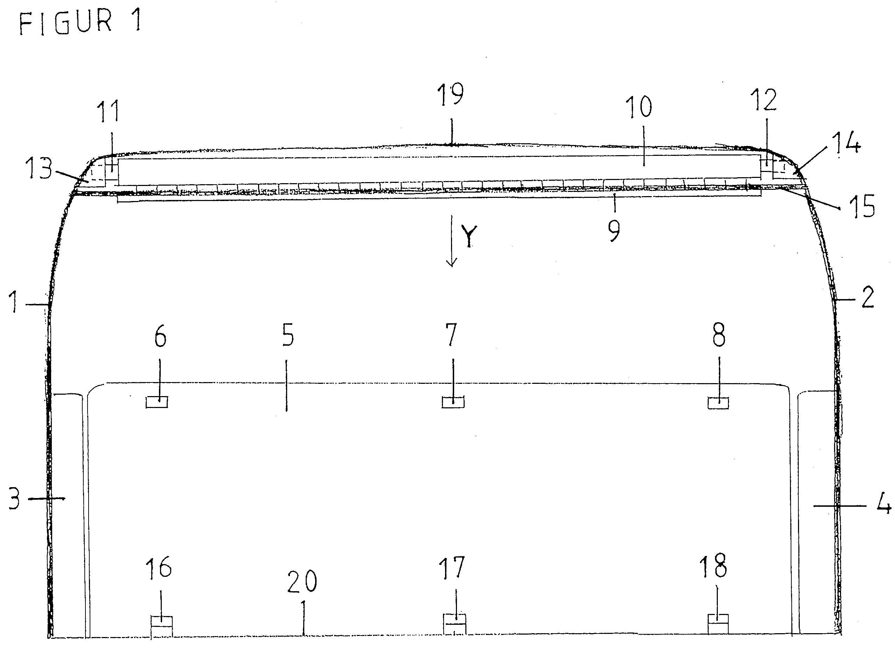

Figur 1 zeigt einen Querschnitt durch den Innenraum eines Fahrzeugs. Das gezeigte Fahrzeug weist eine linke Seitenwand 1, eine rechte Seitenwand 2, ein Dach 19 und ein Bodenteil 20 auf. Mit der linken Seitenwand 1 ist eine linke Seitenverkleidung 3 und mit der rechten Seitenwand 2 eine rechte Seitenverkleidung 4 verbunden. Die Rücksitzlehne 5 des Fahrzeugs, die in der Figur von hinten zu sehen ist, weist an ihrem hinteren oberen Bereich Befestigungsvorrichtungen 6, 7, 8 auf, bei denen es sich vorzugsweise um nach unten gebogene Haken handelt. Alternativ oder zusätzlich zu den Befestigungsvorrichtungen 6, 7, 8 sind entweder am hinteren unteren Bereich der Rücksitzlehne 5 oder am Bodenteil 20 des Fahrzeugs angebrachte Befestigungsvorrichtungen 16, 17 und 18 vorgesehen, bei denen es sich ebenfalls vorzugsweise um nach unten gebogene Haken handelt.

Weiterhin weist das in der Figur 1 gezeigte Fahrzeug an den Seiten des Fahrzeugdaches befestigte Gegenstücke 13 und 14 auf, in die Zapfen 11 und 12 einbringbar und verrastbar sind. Diese Zapfen 11 und 12 sind an den Längsseiten einer länglichen Halterung 10 vorgesehen, in welcher eine Welle gelagert ist. An dieser Welle ist ein Sicherheitsnetz befestigt, welches durch eine in der länglichen Halterung befindliche Öffnung unter Verwendung einer mit dem Sicherheitsnetz fest verbundenen Zugstange 9 in Vertikalrichtung von oben nach unten ausziehbar ist. Befindet sich das Sicherheitsnetz im ausgezogenen Zustand, dann kann die Zugstange 9 in die Befestigungsvorrichtungen 6, 7, 8 oder 16, 17, 18 eingehängt werden. Die Welle kann mittels einer Feder vorgespannt und gegen die Kraft der Feder von oben nach unten ausziehbar sein oder durch einen Elektromotor angetrieben sein. Das Sicherheitsnetz kann horizontal gerichtete Stangen aufweisen, die mittels vertikal gerichteter Verbindungsstücke miteinander verbunden sind.

Um einen besonders guten Halt der länglichen Halterung 10 am Fahrzeugdach 19 sicherzustellen, können am Außenumfang der länglichen Halterung ein oder mehrere weitere Zapfen vorgesehen sein, die in weitere am Fahrzeugdach 19 befestigte Gegenstücke einbringbar und verrastbar sind. Die längliche Halterung kann zur Anpassung an die leicht gebogene Form des Daches 19 ebenfalls eine leicht gebogene Form aufweisen.

Alternativ zu der vorbeschriebenen Ausführungsform kann die längliche Halterung 10 auch mit dem Fahrzeugdach verschraubt sein.

Die in der Figur 1 gezeigte längliche Halterung 10 ist derart im Fahrzeughimmel 15 integriert, daß vom Fahrzeuginnenraum aus im nicht ausgezogenen Zustand des Sicherheitsnetzes lediglich die Zugstange 9 sichtbar ist.

Bei einer ersten Ausführungsform der Erfindung ist die längliche Halterung am Fahrzeugdach etwa im Bereich der Rückenlehnen der Vordersitze über der B-Säule befestigt. Dies hat insbesondere den Vorteil, daß bei teilweise oder komplett umgeklappter Rücksitzlehne das Sicherheitsnetz zur Absicherung der auf den Vordersitzen befindlichen Fahrzeuginsassen bei gleichzeitig zur Verfügung stehendem vergrößerten Laderaum verwendet werden kann. Bei dieser Ausführungsform sind die Befestigungsvorrichtungen 6, 7, 8 bzw. 16, 17, 18 am hinteren oberen Bereich der Rückenlehnen des Fahrer- und Beifahrersitzes bzw. entweder am hinteren unteren Bereich dieser Rückenlehnen oder am Bodenteil des Fahrzeugs unmittelbar hinter den Vordersitzen angebracht.

Bei einer zweiten Ausführungsform der Erfindung ist die längliche Halterung am Fahrzeugdach etwa im Bereich der Rückenlehnen der Rücksitze befestigt, wie bereits im Zusammenhang mit der Figur erläutert wurde. Dies hat insbesondere den Vorteil, daß das Fahrzeug ohne weiteres mit einem Schiebedach ausgerüstet sein kann, was im Falle einer Anordnung im Bereich der Rückenlehnen der Vordersitze erschwert oder gar unmöglich wäre.

Weiterhin kann das Sicherheitsnetz in Horizontalrichtung geringfügig dehnbar sein. Dies hat den Vorteil, daß das Sicherheitsnetz in mehrere fahrzeugseitige Halterungen, bei denen es sich vorzugsweise um in verschiedenen Abständen vom Fahrzeugdach an den Fahrzeugseitenwänden angebrachte Haken handelt, einhängbar ist. Dadurch ist die gesamte Fahrzeugbreite durch das Sicherheitsnetz geschützt, so daß bei einem Unfall auch zwischen dem Sicherheitsnetz und den Fahrzeugseitenwanden keine Gegenstände vom Laderaum in den Fahrzeuggastraum fliegen können.

Bei einer weiteren Ausführungsform der Erfindung enthält die beanspruchte Vorrichtung keine längliche Halterung, sondern ist ohne eine solche in den Fahrzeughimmel integriert. Dabei ist das Sicherheitsnetz an einer drehbaren Welle befestigt. Die Welle selbst ist an ihren Stirnseiten in Gegenstücke eingebracht, die mit dem Fahrzeugdach fest verbunden sind. Auch bei dieser Ausführungsform ist bei nicht ausgezogenem Sicherheitsnetz vom Fahrzeuginnenraum aus lediglich die Zugstange sichtbar, mittels der das Sicherheitsnetz in Vertikalrichtung von oben nach unten ausziehbar ist.

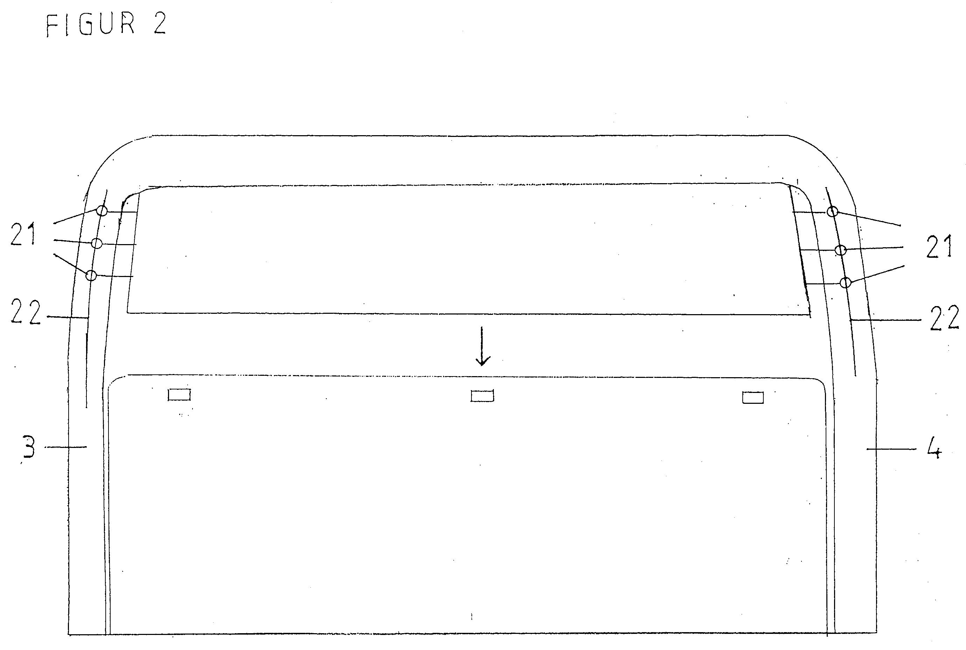

Die Figur 2 zeigt ein weiteres Ausführungsbeispiel für die Erfindung. Bei diesem Ausführungsbeispiel sind in den Seitenverkleidungen 3, 4 des Fahrzeugs - beispielsweise im Bereich der B-Säule - von oben nach unten verlaufende Führungsschienen 22 vorgesehen. Entlang dieser Führungsschienen verlaufen beim Ausziehen des Sicherheitsnetzes von oben nach unten an den Seiten des Sicherheitsnetzes angebrachte Führungselemente 21, beispielsweise Stagreiter oder kleine Rollen, wie sie von Gardinen grundsätzlich bekannt sind. Die Zwischenstücke zwischen dem Sicherheitsnetz und den Führungselementen 21 bestehen aus einem Elastomer, beispielsweise Gummi. Dadurch wird dem Umstand Rechnung getragen, daß die Seitenwände des Fahrzeugs von oben nach unten nicht senkrecht verlaufen, sondern im allgemeinen zur Verringerung des Luftwiderstandes bzw. des cw-Wertes gebogen sind.

Eine vorteilhafte Weiterbildung der Erfindung besteht darin, die Welle nicht so anzuordnen, daß sie sich bei ausgezogenem Netz direkt über dem Netz befindet, sondern derart, daß sie im Fahrzeughimmel entweder nach vorne oder nach hinten versetzt ist. Dies hat den Vorteil, daß das Netz im nicht ausgezogenem Zustand nicht vollständig aufgerollt sein muß und daß dadurch im Fahrzeughimmel Platz bzw. Stauraum für das nicht aufgerollte Netz und die genannten Führungselemente geschaffen wird, so daß das Netz und die Führungselemente bei nicht ausgezogenem Netz vom Fahrzeuginnenraum nicht sichtbar sind.

## Patentansprüche

1. Vorrichtung zum Schutz des Fahrgastraumes eines Fahrzeugs gegenüber im Laderaum des Fahrzeugs beförderten Gegenständen, mit einer mit dem Fahrzeug verbundenen Welle, an der ein Sicherheitsnetz befestigt ist, welches unter Verwendung einer mit dem Sicherheitsnetz fest verbundenen Zieheinrichtung in Vertikalrichtung ausziehbar und im ausgezogenen Zustand in fahrzeugseitigen Halterungen befestigbar ist, **dadurch gekennzeichnet**, daß die Welle an der Oberseite des Fahrzeugs angebracht und das Sicherheitsnetz im Fahrzeug von oben nach unten ausziehbar ist.

2. Vorrichtung nach Anspruch 1, **dadurch gekennzeichnet**, daß die Welle in einer länglichen Halterung (10) angeordnet und das Sicherheitsnetz durch eine in der länglichen Halterung befindliche Öffnung ausziehbar ist.

3. Vorrichtung nach Anspruch 2, **dadurch gekennzeichnet**, daß die längliche Halterung (10) mit dem Fahrzeugdach (19) verschraubt oder verschweißt ist.

4. Vorrichtung nach Anspruch 2, **dadurch gekennzeichnet**, daß die längliche Halterung (10) an ihren Stirnseiten und/oder an ihrem Außenumfang Zapfen (11, 12) aufweist, die in am Fahrzeugdach (19) angebrachte Gegenstücke (13, 14) einbringbar und mit diesen fest verrastbar sind.

5. Vorrichtung nach einem oder mehreren der vorhergehenden Ansprüche, **dadurch gekennzeichnet**, daß sie derart im Fahrzeughimmel integriert ist, daß vom Fahrzeuginnenraum aus im nicht ausgezogenen Zustand des Sicherheitsnetzes lediglich die Zieheinrichtung (9) sichtbar ist.

6. Vorrichtung nach einem oder mehreren der vorhergehenden Ansprüche, **dadurch gekennzeichnet**, daß sie am Fahrzeugdach (19) etwa im Bereich der Rückenlehnen der Vordersitze befestigt ist.

7. Vorrichtung nach einem oder mehreren der Ansprüche 1 - 5, **dadurch gekennzeichnet**, daß sie am Fahrzeugdach (19) etwa im Bereich der Rückenlehnen der Rücksitze befestigt ist.

8. Vorrichtung nach einem oder mehreren der vorhergehenden Ansprüche, **dadurch gekennzeichnet**, daß die Länge des Sicherheitsnetzes so gewählt ist, daß es im ausgezogenen Zustand etwa in Höhe der Oberkante der Rückenlehnen in fahrzeugseitigen Halterungen (6, 7, 8) befestigbar ist.

9. Vorrichtung nach einem oder mehreren der vorhergehenden Ansprüche, **dadurch gekennzeichnet**, daß die Länge des Sicherheitsnetzes so gewählt ist, daß es im ausgezogenen Zustand etwa in Höhe des Fahrzeugbodens (20) oder der Ladefläche in fahrzeugseitigen Halterungen (16, 17, 18) befestigbar ist.

10. Vorrichtung nach einem oder mehreren der vorhergehenden Ansprüche, **dadurch gekennzeichnet**, daß das Sicherheitsnetz in Horizontalrichtung geringfügig dehnbar und in Vertikalrichtung in mehrere fahrzeugseitige Halterungen, die in verschiedenen Abständen vom Fahrzeugdach an den Fahrzeugseitenwänden angebracht sind, einhängbar ist.

11. Vorrichtung nach einem oder mehreren der vorhergehenden Ansprüche, **dadurch gekennzeichnet**, daß die längliche Halterung (10) eine leicht gebogene Form aufweist.

12. Vorrichtung nach einem oder mehreren der vorhergehenden Ansprüche, **dadurch gekennzeichnet**, daß das Sicherheitsnetz seitliche Führungselemente (21) aufweist, die beim Ausziehen des Sicherheitsnetzes von oben nach unten in fahrzeugseitigen Führungsschienen (22) verlaufen.

13. Vorrichtung nach Anspruch 12, **dadurch gekennzeichnet**, daß die Führungselemente (21) mit dem Sicherheitsnetz über aus einem Elastomer bestehende Zwischenstücke (23) verbunden sind.

14. Vorrichtung nach einem oder mehreren der vorhergehenden Ansprüche, **dadurch gekennzeichnet**, daß die Welle im Fahrzeug so angeordnet ist, daß sie sich bei ausgezogenem Netz nicht über dem Netz befindet, sondern im Fahrzeughimmel nach vorne oder nach hinten versetzt ist.

15. Vorrichtung nach einem oder mehreren der vorhergehenden Ansprüche, **dadurch gekennzeichnet**, daß die Welle mittels einer Feder vorgespannt ist.

16. Vorrichtung nach einem oder mehreren der Ansprüche 1 bis 14, **dadurch gekennzeichnet**, daß die Welle von einem Elektromotor angetrieben wird.

17. Vorrichtung nach einem oder mehreren der vorhergehenden Ansprüche, **dadurch gekennzeichnet**, daß das Sicherheitsnetz horizontal gerichtete Stangen aufweist, die mittels vertikal gerichteter Verbindungsstücke miteinander verbunden sind.
